# EUROPÄISCHE PATENTSCHRIFT

(11) **EP 3 749 730 B1**
(45) Veröffentlichungstag und Bekanntmachung des Hinweises auf die Patenterteilung: **18.01.2023**
(21) Anmeldenummer: 18807945.3
(22) Anmeldetag: 21.11.2018
(51) Int. Cl.: C09J 175/02, C08G 18/32, C08G 18/38, C09J 175/12

(54) **ZWEIKOMPONENTEN-STRUKTURKLEBSTOFFE**
TWO-COMPONENT STRUCTURAL ADHESIVES
COLLES STRUCTURALES À DEUX COMPOSANTS

(30) Priorität: 09.02.2018 DE 102018202050
(43) Veröffentlichungstag der Anmeldung: 16.12.2020
(73) Patentinhaber: Glue Tec Industrieklebstoffe GmbH & Co. Kg, 97259 Greußenheim (DE)
(72) Erfinder: HOLST, Marco, 97259 Greußenheim (DE); SCHMALSTIEG, Lutz, 97320 Sulzeld am Main (DE)
(74) Vertreter: Tostmann, Holger Carl
(86) Internationale Anmeldenummer: PCT/EP2018/082083
(87) Internationale Veröffentlichungsnummer: WO 2019/154535

(56) Entgegenhaltungen:
- CA-A1- 2 214 625
- US-B2- 9 499 654
- US-B2- 9 683 152

## Beschreibung

Die vorliegende Erfindung betrifft ein Verfahren zum Verkleben von gleichen oder unterschiedlichen Substraten mit Zweikomponenten-Strukturklebstoffen auf Basis von aliphatischen Polyisocyanaten und Polyasparaginsäureestern, sowie einen Zweikomponenten-Strukturklebstoff, der diese beiden Komponenten aufweist und im ausgehärteten Zustand eine hohe Festigkeit zeigt.

Reaktive Zweikomponenten-Klebstoffe (nachstehend auch "2K-Klebstoffe") finden heutzutage breite Verwendung zum strukturellen Verkleben von Substraten.

Beim strukturellen Kleben werden gleiche oder unterschiedliche Substrate dauerhaft miteinander verbunden, wobei das verklebte Bauteil üblicherweise eine konstruktive Funktion übernimmt.

Strukturklebstoffe verfügen über eine vergleichsweise große innere Festigkeit-Kohäsion- und gleichzeitig eine gute Adhäsion zum Substrat. Ein wesentlicher Vorteil der Zweikomponenten-Strukturklebstoffe ist die relativ schnelle Aushärtung ohne Schichtdickeneinschränkung und die Freiheit von organischen Lösemitteln. Dabei ist die Härtung lediglich abhängig von der Temperatur und erfolgt im Wesentlichen unabhängig von Luftfeuchtigkeit oder Sauerstoffgehalt der Umgebung.

Zur Abgrenzung von elastischen Kleb- und Dichtstoffen sind Strukturklebstoffe im Rahmen der vorliegenden Anmeldung durch eine Zugscherfestigkeit auf angerautem V2A-Stahl gemäß DIN/EN 1465 (2009-07) von mindestens 7 MPa, bevorzugt mindestens 10 MPa, weiter bevorzugt mindestens 12 MPa gekennzeichnet.

Als Zweikomponenten-Strukturklebstoffe des Standes der Technik haben sich im Wesentlichen drei verschiedene Produktgruppen etabliert:
- Zweikomponenten-Epoxidharzklebstoffe basierend auf einer Polyepoxidkomponente und einer Polyamin- und/oder Polymercaptankomponente,
- Zweikomponenten-Acrylatklebstoffe basierend auf Acrylatcopolymeren, die mit einer Peroxidkomponente radikalisch gehärtet werden, und
- Zweikomponenten-Polyurethanklebstoffe basierend auf einer Polyisocyanatkomponente und einer Polyol- und/oder Polyaminkomponente.

Zweikomponenten-Epoxidharzklebstoffe bilden aufgrund ihres variablen Eigenschaftsprofils und ihrer hervorragenden Haftung auf vielfältigen Substraten die möglicherweise wichtigste Klasse der Strukturklebstoffe. Problematisch bei dieser Klasse der Strukturklebstoffe ist jedoch die vergleichsweise langsame Härtung, insbesondere bei tieferen Temperaturen. Unterhalb einer Temperatur von ca. 8°C härten diese Klebstoffe nicht mehr verlässlich aus.

Zweikomponenten-Acrylatklebstoffe härten dagegen deutlich schneller aus. Als nachteilig bei diesen Strukturklebstoffen wird jedoch die Anwesenheit von geruchsintensiven und gesundheitsschädlichen Acrylatmonomeren wie beispielsweise Methylmethacrylat, Cyclohexylmethacrylat oder Tetrahydrofurfurylmethacrylat angesehen. Weiterhin problematisch bei diesen Strukturklebstoffen ist das relativ ungünstige Verhältnis zwischen Korrekturzeit einerseits und hinreichender Montagefestigkeit andererseits.

Zweikomponenten-Polyurethanklebstoffe können unterschiedlich formuliert werden und können daher besonders vielfältig als Strukturklebstoffe eingesetzt werden. Aufgrund ihrer hohen Reaktivität kommen in reaktiven Strukturklebstoffen ganz überwiegend aromatische Isocyanate zum Einsatz. Die monomeren aromatischen Diisocyanate Diphenylmethandiisocyanat -MDI- und Toluylendiisocyanat -TDI- besitzen cancerogene Eigenschaften, womit deren Einsatz streng limitiert ist. Auch die Hydrolyseprodukte der monomeren Diisocyanate, aromatische Diamine, sind cancerogen und werden durch Migration aus den Klebstoffen freigesetzt. Heutzutage werden daher vielfach monomerenarme Polyisocyanate auf Basis von TDI und/oder MDI eingesetzt, die durch Oligomerisierung oder Prepolymerisierung dieser Isocyanate hergestellt werden und durch anschliessende Dünnschichtdestillation von monomeren Diisocyanaten befreit werden. Üblicherweise sind die so erhaltenen Polyisocyanate und/oder Isocyanatprepolymere hochviskos oder harzartig, so dass die Produkte nur unter Zuhilfenahme von Lösemitteln oder Weichmachern zu Klebstoffen verarbeitet werden können, was klebetechnisch und unter Umweltaspekten von Nachteil ist.

Aliphatische, monomerenarme Polyisocyanate auf Basis von Isophorondiisocyanat und/oder Hexamethylendiisocyanat sind dagegen physiologisch günstiger zu bewerten, besitzen aber eine deutlich niedrigere Reaktivität im Vergleich zu den aromatischen Isocyanaten, so dass die Aushärtung der Klebstoffe vergleichsweise langsam ist. Daher werden die aliphatischen Polyisocyanate bisher nur in speziellen Anwendungen zum strukturellen Verkleben eingesetzt.

Zweikomponenten-Polyurethanklebstoffe enthalten als zweite Komponente Polyole wie beispielsweise Polyesterpolyole, Polyetherpolyole, Polycarbonatpolyole oder niedermolekulare Polyalkohole. Da die Reaktion mit den Polyisocyanaten relativ langsam verläuft, müssen in der Regel Katalysatoren zur Beschleunigung der Aushärtung zugesetzt werden. Dies sind zum Teil toxische Organozinnverbindungen oder stark basische tertiäre Aminverbindungen. Auch bei Verwendung der genannten Katalysatorsysteme ist die Härtungsgeschwindigkeit für viele moderne Fertigungsverfahren nicht ausreichend oder zumindest verbesserungsbedürftig.

Eine wesentlich schnellere Aushärtung erreicht man, wenn die vorstehend genannten Polyole anteilig oder vollständig durch aromatische Polyaminverbindungen ersetzt werden. Die Polyaddition der aromatischen Amine mit den Polyisocyanaten erfolgt im Minutenbereich, so dass mit Hilfe dieser Technologie Strukturklebstoffe formuliert werden können, die ein günstiges Verhältnis von Korrekturzeit einerseits zu hinreichender Montagefestigkeit andererseits aufweisen. Nachteilig bei diesen Klebstoffen ist die starke Vergilbungsneigung sowie die mangelhafte Reaktivität bei Temperaturen unterhalb von ca. 5°C.

Eine Übersicht zu Strukturklebstoffen findet sich beispielsweise bei 'Bodo Müller und Walter Rath, Formulierung von Kleb- und Dichtstoffen', 3. Auflage, Vincentz Network 2015, S107 ff.

Eine weitere Klasse von aushärtbaren Zweikomponenten-Systemen basiert auf aliphatischen Polyisocyanaten und aminfunktionellen Asparaginsäureestern wie diese durch Addition von Maleinsäure- und/oder Fumarsäureestern an Polyamine erhalten werden können. Diese sind prinzipiell als Lacke und Beschichtungssysteme bekannt und werden beispielhaft in folgenden Patentanmeldungen beschrieben: EP 403 921, EP 0 573 860, US 6 605 684, EP 1 767 559, WO 2001/007504, WO 2001/007399, US 6 458 293, EP 1 426 397, DE 10 2006 002 153 A1 oder der WO 2004/033517 sowie den neueren Patentanmeldungen EP 3 098 247 A1 und EP 3 115 388 A1. Allerdings geben diese Anmeldungen keinerlei Hinweise auf den möglichen Einsatz solcher Beschichtungssysteme in strukturellen Verklebungen.

WO 2009/003596 betrifft medizinische Klebstoffe auf Basis hydrophiler Polyisocyanat Prepolymere für die Chirurgie, insbesondere als Gewebekleber. WO 2011/138274 betrifft Polyisocyanat Prepolymere, die Polyethercarbonatpolyole als Aufbaukomponente enthalten, ihre Herstellung sowie ihre Verwendung als Isocyanat-Komponente in Ein- und Zweikomponenten-Systemen für Lacke, Klebstoffe und Dichtstoffe. Diesen Patentanmeldungen ist gemeinsam, dass spezielle Isocyanat-Endgruppen aufweisende Prepolymere eingesetzt werden. Im Rahmen der vorliegenden Erfindung wurde die Beobachtung gemacht, dass solche auf Prepolymeren basierende Zweikomponenten-Klebstoffe zu sehr weichen Polymeren mit geringer mechanischer Festigkeit aushärten und daher als Strukturklebstoffe nicht geeignet sind (siehe auch Vergleichsbeispiel 6 weiter unten).

Im Unterschied zu Lacken und Beschichtungen müssen Strukturklebstoffe eine deutlich höhere innere Festigkeit -Kohäsion- aufweisen und im Hinblick auf Klebefugen unterschiedlicher Dimension auch in deutlich höherer Schichtdicke applizierbar sein. Darüber hinaus sind auch die Anforderungen in Strukturklebstoffen an die Adhäsion zu unterschiedlichen Substraten deutlich höher als für einem Lack oder eine Beschichtung. Weiterhin sind die Belastungen einer strukturellen Verklebung grundsätzlich andere als für Lacke oder Beschichtungen: statische Belastungen der Verklebungen sind Druck- und Zugbelastung sowie Scher- und Schäl-Belastung.

Des Weiteren sind bei Strukturklebstoffen insbesondere dynamische Belastungen durch Scher- oder Schälbewegungen relevant, sowie Schlag- und Stoßbelastungen, die insbesondere bei tiefen Temperaturen immer wieder Grund für die ungenügende Anwendbarkeit von Strukturklebstoffen sind. Eine Übersicht zu dieser Problematik findet sich beispielsweise bei 'Bodo Müller und Walter Rath, Formulierung von Kleb- und Dichtstoffen, 3. Auflage, Vincentz Network 2015, S291 ff.

US 9 499 654 offenbart wässrige Urethanharz-Zusammensetzungen basierend auf wasserdispergierbaren Polyisocyanaten, die in Lacken. Klebstoffen und als Dichtmittel genutzt werden.

CA 2 214 625t offenbart Ester und Amidgruppen enthaltende Polyamine, die als Reaktionskomponente in 2K-PUR Klebstoffen eingesetzt werden.

US 9 683 152 offenbart Polyurethanklebstoffe basierend auf Polyethertriolen und Polyisocyanaten.

Zusammenfassend lässt sich also feststellen, dass die Strukturklebstoffe des Standes der Technik den Anforderungen an moderne und schnelle Fertigungs- und Klebeverfahren nicht in vollem Umfang gerecht werden.

Aufgabe der vorliegenden Erfindung war daher die Bereitstellung eines neuen Strukturklebstoffes von vergleichsweise hoher Festigkeit sowie eines Verfahren zum Verkleben von Substraten, wobei 'dieser Klebstoff und dieses Verfahren die oben genannten Nachteile des Standes der Technik überwindet oder zumindest minimiert.

Diese und andere Aufgabe(n) werden mit der Bereitstellung des unten beschriebenen Verfahrens sowie durch den nachfolgend beschriebenen Zweikomponenten-Strukturklebstoff gelöst:
In einer Ausführungsform betrifft die vorliegende Erfindung einen Zweikomponenten-Strukturklebstoff, der zumindest die folgenden Komponenten aufweist,
(i) mindestens ein freie Isocyanatgruppen aufweisendes Polyisocyanat mit einem Gehalt an aliphatisch gebundenen NCO-Gruppen von 16,0 bis 24,0 Gew.-%, welches im Wesentlichen frei ist von Ester- und/oder Ether- und/oder Carbonatgruppen,
(ii) mindestens einen aminofunktionellen Polyasparaginsäureester der allgemeinen Formel 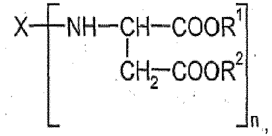 in der n = 2 ist und X für einen 2-wertigen organischen Rest steht, der durch Entfernung der Aminogruppen aus einem linearen (geradkettigen) oder verzweigten aliphatischen Diamin mit bis zu 9 Kohlenstoffatomen erhältlich ist, oder vorzugsweise durch Entfernung der Aminogruppen aus 1,4-Diaminobutan, 1,6-Diaminohexan, 2,2,4- Trimethyl-1,6-und/oder 2,4,4-Trimethyl-1,6-diaminohexan erhältlich ist, oder besonders bevorzugt durch Entfernung der Aminogruppen aus 2-Methyl- 1,5-Diaminopentan erhältlich ist,
   wobei R¹ und R² für eine Methyl- oder eine Ethylgruppe stehen,
wobei der Strukturkleber im ausgehärteten Zustand eine Zugscherfestigkeit von mindestens 7 MPa bevorzugt mindestens 10 MPa aufweist, weiter bevorzugt mindestens 12 MPa aufweist, wobei die Zugscherfestigkeit gemäß Standard DIN/EN 1465 (2009-07) zwischen zwei Prüfkörpern aus angerautem V2A Stahl gemessen wird,
wobei der Strukturklebstoff die in Anspruch 1 genannte Zusammensetzung aufweist.

In einer weiteren Ausführungsform betrifft die vorliegende Erfindung ein Verfahren zum strukturellen Verkleben von gleichen oder unterschiedlichen Substraten mit Zweikomponenten-Strukturklebstoffen, wobei das Verfahren zumindest die folgenden Schritte aufweist:
(1) Bereitstellen eines Zweikomponenten-Strukturklebstoffes, der zumindest die folgenden Komponenten enthält:
   (i) mindestens ein freie Isocyanatgruppen aufweisendes Polyisocyanat mit einem Gehalt an aliphatisch gebundenen NCO-Gruppen von 16,0 bis 24,0 Gew.-%, welches im Wesentlichen frei ist von Ester- und/oder Ether- und/oder Carbonatgruppen,
   (ii) mindestens einen aminofunktionellen Polyasparaginsäureester der allgemeinen Formel 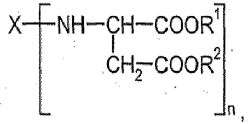 in der n = 2 ist und X für einen 2-wertigen organischen Rest steht, der durch Entfernung der Aminogruppen aus einem linearen oder verzweigten aliphatischen Diamin mit bis zu 9 Kohlenstoffatomen erhältlich ist, oder vorzugsweise durch Entfernung der Aminogruppen aus 1,4-Diaminobutan, 1,6-Diaminohexan, 2,2,4- Trimethyl-1,6-und/oder 2,4,4-Trimethyl-1,6-diaminohexan erhältlich ist, oder besonders bevorzugt durch Entfernung der Aminogruppen aus 2-Methyl- 1,5-Diaminopentan erhältlich ist,
      und R¹ und R² für eine Methyl- oder eine Ethylgruppe stehen;
(2) strukturelles Verkleben von zumindest zwei gleichen oder unterschiedlichen Substraten;
(3) Aushärten der zumindest einen Verklebung, so dass diese im ausgehärteten Zustand eine Zugscherfestigkeit von mindestens 7 MPa bevorzugt mindestens 10 MPa, weiter bevorzugt mindestens 12 MPa aufweist, wobei die Zugscherfestigkeit gemäß Standard DIN/EN 1465 (2009-07) zwischen zwei Prüfkörpern aus angerautem V2A Stahl gemessen wird,
wobei das Verfahren wie in Anspruch 2 beschrieben ist

In Übereinstimmung mit vorliegenden Erfindung bedeutet "im Wesentlichen frei von Ester- und/oder Ether- und/oder Carbonatgruppen", dass im Zweikomponenten-Strukturklebstoffweniger als 15%, bevorzugt weniger als 10%,besonders bevorzugt weniger als 5%, jeweils bezogen auf das Gesamtgewicht des Zweikomponenten-Strukturklebstoffes, an Ester- Ether- und /oder Carbonatpolyolen als Reaktivkomponente bei der Herstellung von Isocyanatprepolymeren im Rahmen der Komponente i) eingesetzt werden. Optional liegen weniger als 15%, bevorzugt weniger als 10%,besonders bevorzugt weniger als 5%, jeweils bezogen auf das Gesamtgewicht des Zweikomponenten-Strukturklebstoffes, an Ester- Ether- und /oder Carbonatpolyolen als Bestandteil der Komponente ii) vor.

Im Rahmen der vorliegenden Erfindung wird der Gehalt an freien Isocyanatgruppen in Übereinstimmung mit dem Standard DIN EN 1242 (2013-05) bestimmt.

Soweit nicht anders angegeben, beziehen sich alle Prozentangaben in der vorliegenden Offenbarung auf Gewichtsprozent (Gew.-%), jeweils bezogen auf das Gesamtgewicht des Strukturklebstoffes.

In Ausführungsformen der vorliegenden Erfindung enthält der Zweikomponenten-Strukturklebstoff neben den oben genannten Komponenten (i) und (ii) noch zumindest eine weitere Komponente (iii), die ein Hilfs- oder Zusatzstoff des Zweikomponenten-Strukturklebstoffes ist. Bevorzugte Hilfs- oder Zusatzstoffe werden nachstehend sowie in den Ansprüchen beschrieben.

Der vorliegenden Erfindung liegt unter anderem die Beobachtung zugrunde, dass die hier näher charakterisierten Zweikomponenten-Systeme auf Basis der beanspruchten aminofunktionellen Asparaginsäureestern und der beanspruchten aliphatischen Polyisocyanaten überraschenderweise als Strukturklebstoffe besonders geeignet sind, da sie ein besonders günstiges Verhältnis von ausreichender Korrekturzeit bei gleichzeitig schneller Montagefestigkeit aufweisen, in einem sehr breiten Temperaturfenster applizierbar und einsetzbar sind, sowie Verklebungen mit ausgezeichneter Zugscherfestigkeit ergeben.

Das erfindungsgemäße Verfahren sowie der erfindungsgemäße Zweikomponenten-Strukturklebstoff zeichnen sich weiterhin insbesondere durch folgende Eigenschaften und Vorteile aus, die zumindest teilweise, vorzugsweise alle gemeinsam erreicht werden:
- günstige physiologische Eigenschaften der verwendeten Rohstoffe,
- gute Licht und UV-Beständigkeit der Verklebungen,
- ausreichende Korrekturzeit bei gleichzeitig schneller Montagefestigkeit,
- Applikations-Sicherheit in einem Temperaturfenster von -10°C bis +40°C,
- Funktionssicherheit im Temperaturbereich von -20°C bis 150°C.

Als Komponente i) einsetzbare Polyisocyanate werden vorzugsweise mit Hilfe geeigneter Modifizierungsreaktionen, wie z.B. Dimerisierung, Trimerisierung, Biuretisierung, Allophanatisierung und/oder Urethanisierung von Hexamethylendiisocyanat und/oder Isophorondiisocyanat, weiter vorzugsweise ausschließlich auf Basis von Hexamethylendiisocyanat, hergestellt, wobei vorzugsweise überschüssiges monomeres Diisocyanat anschließend destillativ aus dem Gemisch entfernt wird, wodurch die Polyisocyanate Restgehalte an monomerem Diisocyanat vorzugsweise <0,5%, bevorzugt <0,3%, besonders bevorzugt <0,1%, jeweils bezogen auf das Gesamtgemisch der Polyisocyanatmischung enthalten.

In Ausführungsformen der Erfindung weist die Komponente i) Restgehalte an monomerem Diisocyanat von < 0,5 Gew.-% auf, bevorzugt < 0,3 Gew.-%, besonders bevorzugt < 0,1 Gew.-%, jeweils bezogen auf das Gesamtgewicht der Polyisocyanatmischung.

Bevorzugt als Komponente i) geeignete Polyisocyanate sind Uretdion-, Isocyanurat-, Iminooxadiazindion-, Urethan-, Allophanat-, Biuret- und/oder Oxadiazintriongruppen enthaltende Derivate des HDI, die bei 23°C eine Viskosität von 200 bis 12.000 mPas aufweisen, sowie vorzugsweise einen Gehalt an Isocyanatgruppen von 16 bis 24 Gew.-%, vorzugsweise 17 bis 23,5 Gew.-% und eine durchschnittliche Isocyanat-Funktionalität von mindestens 2,5, bevorzugt mindestens 3,0 aufweisen.

Geeignete Polyisocyanate sind beispielhaft beschrieben in Laas et al., J. Prakt. Chem. 336, 1994, 185-200, DE-A 1 670 666, DE-A 3 700 209, DE-A 3 900 053, EP-A 0 330 966, EP-A 0 336 205, EP-A 0 339 396 und EP-A 0 798 299.

Bevorzugt als Komponente i) sind Polyisocyanate auf Basis von Hexamethylendiisocyanat mit Biuretstrukturen und/oder Isocyanuratstrukturen und/oder Iminooxadiazindionstrukturen.

In einer bevorzugten Ausführungsform der vorliegenden Erfindung werden als Komponente i) Alkoxysilangruppen-aufweisende Polyisocyanatgemische eingesetzt. Derartige Polyisocyanatgemische können erhalten werden durch Umsetzung von Polyisocyanaten mit funktionellen Silanen, die eine funktionelle Gruppe aufweisen, die mit den Isocyanatgruppen der Polyisocyanate reagieren können, oder durch Verfahren, wie sie beispielhaft beschrieben werden in der DE 10 2009-07 047 964 A1 und der DE 10 2007 032 666 A1.

Die erfindungsgemäß als Komponente i) einsetzbaren Polyisocyanate können im Hinblick auf eine Anpassung der Mischungsverhältnisse der verarbeitungsfähigen Zweikomponentenmischung mit untergeordneten Mengen an Isocyanatprepolymeren gemischt werden.

Dies sind bevorzugt die aus der Polyurethantechnologie prinzipiell bekannten Isocyanatprepolymere, die durch Umsetzung von aliphatischen Di- oder Polyisocyanaten mit höhermolekularen Polyolen insbesondere Polyetherpolyolen, Polyesterpolyolen und/oder Polycarbonatpolyolen hergestellt werden. Hierbei werden bevorzugt zur Abmischung nur untergeordnete Mengen an Isocyanatprepolymeren verwendet, wobei die Mischung den vorstehend gemachten Angaben bezüglich Isocyanatgehalt und Restmonomergehalt entspricht. Die Mengen an Isocyanatprepolymeren beträgt dabei vorzugsweise weniger als 20 Gew.-% bezogen auf das Gesamtgewicht der Komponente i), vorzugsweise weniger als 10 Gew.-%, besonders bevorzugt weniger als 5 Gew.-%.

Härterkomponenten (ii) im Rahmen der vorliegenden Erfindung sind aminofunktionelle Polyasparaginsäureester der allgemeinen Formel 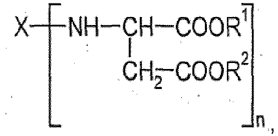 wobei n = 2 ist, und X für einen 2-wertigen organischen Rest steht, der durch Entfernung der Aminogruppen aus einem linearen (geradkettigen) oder verzweigten aliphatischen Diamin mit bis zu 9 Kohlenstoffatomen erhältlich ist, und R¹ und R² für eine Methyl- oder eine Ethylgruppe stehen.

Bevorzugt steht X für einen 2-wertigen organischen Rest, der durch Entfernung der Aminogruppen aus 1,4-Diaminobutan, 1,6-Diaminohexan, 2,2,4- Trimethyl-1,6-diaminohexan und/oder 2,4,4-Trimethyl-1,6-diaminohexan erhältlich ist, wobeiR¹ und R² für eine Methyl- oder eine Ethylgruppe stehen.

Bevorzugt steht X für einen 2-wertigen organischen Rest, wie dieser durch Entfernung der Aminogruppen aus 1,6-Diaminohexan oder dessen Isomeren erhältlich ist, wobei R¹ und R² jeweils für eine Ethylgruppe stehen.

In einer besonders bevorzugten Ausführungsform steht X für einen 2-wertigen organischen Rest, der durch Entfernung der Aminogruppen aus 2-Methyl- 1,5-Diaminopentan erhältlich ist, wobei R1 und R2 jeweils für eine Ethylgruppe stehen

Die Herstellung der aminofunktionellen Polyasparaginsäureester (ii) erfolgt in an sich bekannter Weise durch Umsetzung linearer oder verzweigter aliphatischer Diamine wie beispielsweise 1,4-Diaminobutan, 1,6-Diaminohexan, 2,2,4- Trimethyl-1,6-diaminohexan und/oder 2,4,4-Trimethyl-1,6-diaminohexan oder 2-Methyl- 1,5-Diaminopentan mit Malein- oder Fumarsäureestern der allgemeinen Formel R¹ OOCCH=CHCOOR².

Beispiele bevorzugter Malein- oder Fumarsäureester sind Maleinsäuredimethylester und bevorzugt Maleinsäurediethylester, sowie die entsprechenden Fumarsäureester. Besonders bevorzugt ist Maleinsäurediethylester.

Bevorzugt als Komponente ii) im Rahmen der vorliegenden Erfindung ist das Umsetzungsprodukt von 1,6-Diaminohexan mit Maleinsäurediethylester.

Weiter besonders bevorzugt als Komponente ii) im Rahmen der vorliegenden Erfindung ist auch das Umsetzungsprodukt von 2-Methyl-1,5-diaminopentan mit Maleinsäurediethylester.

Die Herstellung der aminofunktionellen Polyasparaginsäureester (ii) aus den genannten Ausgangsmaterialien erfolgt bevorzugt innerhalb des Temperaturbereichs von 0 bis 100°C, wobei die Ausgangsmaterialien bevorzugt in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können.

Die Umsetzung kann in Substanz oder in Gegenwart geeigneter Lösungsmittel wie Methanol, Ethanol, Propanol oder Dioxan oder Gemischen derartiger Lösungsmittel erfolgen, wobei die Mitverwendung von Lösungsmitteln weniger bevorzugt ist.

Die erfindungsgemäßen Zweikomponenten-Strukturklebstoffe können in Ausführungsformen als Komponente iii) in der Klebstofftechnologie vorteilhafte Füllstoffe, Hilfs- und Zusatzmittel enthalten. Dies sind beispielsweise anorganische und organische Füllstoffe, Flammschutzmittel, Pigmente, Verlaufshilfsmittel, Thixotropiermittel, Lösungsmittel oder Weichmacher oder (andere) Viskositätsregulatoren.

Lösungsmittel können als Komponente iii) gegebenenfalls zur Verbesserung der Untergrundbenetzung in geringen Mengen mitverwendet werden, d.h in Übereinstimmung mit den Ansprüchen. in Mengen von weniger als 5 Gew.-%, bevorzugt weniger als 2 Gew.-% besonders bevorzugt weniger als 1 Gew.-%, jeweils bezogen auf das Gesamtgewicht des Strukturklebstoffs.

Geeignete Lösungsmittel sind insbesondere die üblichen organischen Lösemittel wie beispielsweise Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebige Gemische derartiger Lösungsmittel.

In einer bevorzugten Ausführungsform der vorliegenden Erfindung enthalten die Strukturklebstoffe als Komponente iii) anorganische Flammschutzmittel sowie ggf. zusätzlich organische Flammschutzmittel.

Als anorganische Flammschutzmittel sind Aluminiumhydroxid und Magnesiumhydroxid bevorzugt, wobei vorzugsweise Aluminiumhydroxid in Pulverform mit Teilengrößen von 0,1 µm bis 100 µm eingesetzt wird.

Als organische Flammschutzmittel sind insbesondere Phosphorsäureester bevorzugt wie beispielsweise Triethylphosphat, Tributylphosphat, Tris-2-ethylhexylphosphat, Triphenylphosphat, Diphenyloctylphosphat oder Trikresylphosphat.

Besonders bevorzugt wird eine Kombination von pulverförmigen Aluminiumhydroxid und Tris-2-ethylhexylphosphat als Flammschutzmittel eingesetzt.

Neben den genannten Flammschutzmitteln, oder anstelle davon, können die Strukturklebstoffe als Komponente iii) auch Füllstoffe enthalten. Geeignete Füllstoffe sind Sande, Gesteinsmehl, Quarzmehl, Talkum, natürliche, gemahlene oder gefällte Calciumcarbonate, welche ggf. mit Fettsäuren beschichtet sein können, Bariumsulfat (BaSO₄, auch Baryt oder Schwerspat genannt), Ruß, sowie Kieselsäuren, bevorzugt hochdisperse Kieselsäuren aus Pyrolyseprozessen.

Diese Füllstoffe werden vorzugsweise in die Komponente ii) eingearbeitet.

Als Pigmente sind prinzipiell alle aus der Beschichtungstechnologie an sich bekannten organischen und anorganischen Pigmente, gegebenenfalls als Pastenzubereitung, als Komponente iii) einsetzbar. Derartige Pigmente werden vorzugsweise in die Komponente ii) eingearbeitet.

Als Komponente iii) können die Zweikomponenten-Strukturklebstoffe weiterhin reaktive Verdünner enthalten, die vorzugsweise in die Komponente ii) eingearbeitet werden. Als reaktive Verdünner einsetzbar sind beispielsweise Asparaginsäureester auf Basis von Polyetheraminen, so wie dies in der WO 2014/151307 A1 offenbart wird.

Weiterhin geeignet als reaktive Verdünner sind die aus der Polyurethanchemie an sich bekannten niedermolekularen Polyole wie beispielsweise. 1,2-Ethandiol, 1,2-Propandiol, 1,4- bzw. 1,3-Butandiol, 1,6-Hexandiol, 2-Ethylhexandiol-1,3, 1,8-Octandiol, oder auch Dimerfettalkohole. Ebenfalls einsetzbar sind Ethergruppen aufweisende Diole wie z.B. Diethylenglykol, Triethylenglykol, Tetraethylenglykol, Dipropylenglykol, Tripropylenglykol oder auch Gemische derartiger Alkohole.

Die genannten reaktiven Verdünner haben vorzugsweise einem Massenanteil von weniger als 10 %, bevorzugt weniger als 5 %, besonders bevorzugt weniger als 2 % bezogen auf das Gesamtgewicht der Klebstoffformulierung.

Zur Erzeugung einer ausreichenden Haftung auf Substraten können darüber hinaus höhermolekulare Polyole der aus der Polyurethanchemie an sich bekannten Art als Komponente iii) mitverwendet werden. Dies sind insbesondere hydroxyfunktionelle Polyetherpolyole, Polyesterpolyole, Polycarbonatpolyole und Polyacrylatpolyole, sowie Mischungen der vorstehend vorstehend genannten Polyole. Derartige Polyole werden vorzugsweise in die Komponente ii) eingearbeitet. Die genannten Polyole werden bevorzugt in einem Massenanteil von weniger als 15%, bevorzugt weniger als 10%, besonders bevorzugt weniger als 5 %, bezogen auf das Gesamtgewicht der Klebstoffformulierung eingesetzt.

Zur Erzeugung einer ausreichenden Haftung auf speziellen Substraten können die im erfindungsgemäßen 2K-Strukturklebstoffe bevorzugt funktionelle Silane als Komponente iii) enthalten. Bevorzugt sind in diesem Zusammenhang γ-organofunktionelle Silane oder α-organofunktionelle Silane.

Bevorzugt sind insbesondere 3-Mercaptopropyl-trimethoxysilan, 3-Aminopropyltrimethoxysilan, N-Alkyl-3-aminopropyltrimethoxysilan, N-Aminoethyl-3-aminopropyltrimethoxysilan, 3-Ureidopropyltrimethoxysilan, Vinyltrimethoxysilan, 3-Methacryloxypropyltrimethoxysilan, 3-Glycidoxypropyltrimethoxysilan sowie die entsprechenden Triethoxysilanderivate und Dimethoxymethylderivate der vorstehend benannten funktionellen Silane. Weiterhin bevorzugt sind als Silane Tris-[3-(trimethoxysilyl) propyl]-isocyanurat und N-Methyl[3-(Trimethoxysilyl) propyl]carbamat, Methacryloxymethyltrimethoxysilan, N-Trimethoxysilylmethyl-O-methylcarbamat

Selbstverständlich sind im Rahmen der Komponente iii) auch Mischungen der vorgenannten Silane oder auch deren Oligomerisierungsprodukte einsetzbar. Die benannten funktionellen Silane werden bevorzugt in Mengen von weniger als 2 Gew.-%, bevorzugt weniger als 1 Gew.-%, bezogen auf das Gesamtgewicht der Klebstoffformulierung, mitverwendet.

Zur Anpassung der Reaktionsgeschwindigkeit können die erfindungsgemäßen 2K-Strukturklebstoffe als Komponente iii) Katalysatoren enthalten. Dies sind bevorzugt Katalysatoren wie Wasser oder tertiäre Amine. Weiterhin bevorzugte Katalysatoren im Rahmen der vorliegenden Erfindung sind Carbonsäuren wie beispielsweise Ameisensäure, Essigsäure, Propionsäure oder Benzoesäure sowie auch Dicarbonsäuren wie Oxalsäure oder Malonsäure.

In einer besonders bevorzugten Ausführungsform der vorliegenden Erfindung enthalten die erfindungsgemäßen 2K-Strukturklebstoffe Wasser als Katalysator. Besonders bevorzugt enthalten die erfindungsgemäßen 2K-Strukturklebstoffe im Rahmen der Komponente iii) 0,1 Gew.-% bis 1 Gew.-% Wasser bezogen auf das Gesamtgewicht der Klebstoffformulierung.

In einer besonders bevorzugten Ausführungsform der vorliegenden Erfindung enthalten die 2K-Strukturklebstoffe als Komponente iii) aliphatische Polyamine. Derartige Polyamine reagieren schneller als die Asparaginsäureester der Komponente ii) und werden in diese eingearbeitet. Durch die schnelle Reaktion der Polyamine erfolgt ein schneller Viskositätsaufbau unmittelbar nach der Applikation. Daher können die Polyamine der nachstehend beispielhaft genannten Art vorteilhaft zur Rheologiekontrolle verwendet werden. Bevorzugte Amine sind insbesondere aliphatische oder cycloaliphatische Polyamine mit primären und/oder sekundären Amingruppen.

Bevorzugte Polyamine sind Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 2-Methyl-1,5-Diaminopentan 1,11-Diaminoundecan, 1,12-Diaminododecan, 1-Amino-3,3,5-trimethyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'-diamino-dicyclohexyl-methan, 1,3-Bis(aminomethyl)benzen sowie Polyetheramine.

Besonders bevorzugt einsetzbar sind in diesem Zusammenhang Polyethylenpolyamine wie Diethylentriamin, Triethylentetramin und/oder Tetraethylenpentamin sowie deren Gemische.

Prinzipiell einsetzbar sind auch die Umsetzungsprodukte der genannten Diamine mit Derivaten der Acrylsäure und/oder der Methacrylsäure.

Derartige Polyamine werden bevorzugt in einem Massenanteil von bis zu 5 Gew.-%, besonders bevorzugt bis zu 2 Gew.-% bezogen auf das Gesamtgewicht der Klebstoffformulierung als Komponente iii) mitverwendet.

Als weitere Hilfs- und Zusatzmittel iii) seien Entlüftungsmittel, Entschäumer, Verlaufshilfsmittel und Alterungsschutzmittel genannt. Als Alterungsschutzmittel seien an dieser Stelle Antioxidationsmittel, UV-Absorber und Radikalfänger sowie entsprechende Kombinationen aus diesen Alterungsschutzmitteln genannt.

In den erfindungsgemäßen 2K-Strukturklebstoffen werden die Komponenten i), ii) und gegebenenfalls iii) bevorzugt in einem Mengenverhältnis eingesetzt, so dass das Äquivalentverhältnis der Isocyanatgruppen der Komponente (i) zu den Amino- und/oder Hydroxylgruppen der Komponente ii) und iii) 0,9 : 1 bis 1,4 : 1 beträgt, vorzugsweise 1:1 bis 1,3 :1.

Die erfindungsgemäßen 2K-Strukturklebstoffe weisen bevorzugt einen Massenanteil von 35 bis 55 Gew.-%, vorzugsweise 40 bis 50 Gew.-% an Komponente i) auf, einen Massenanteil von 20 bis 55 Gew.-%, vorzugsweise 35 bis 50 Gew.-% an Komponente ii), und einen Massenanteil von 0 bis 30 Gew.-%, vorzugsweise 1 bis 15 Gew.-% an der optionalen Komponente iii).

Die 2K-Strukturklebstoffe werden bevorzugt als Zweikomponentensysteme bestehend aus einer Harzkomponente und einer Härterkomponente formuliert.

Die Formulierung erfolgt dabei vorzugsweise so, dass die Harzkomponente alle Komponenten ii) und gegebenenfalls iii) enthält. Gegebenenfalls können Lösungsmittel und Viskositätsregulatoren sowie Alterungsschutzmittel im Hinblick auf eine Angleichung der Viskositäten der beiden Komponenten der Komponente i) zugegeben werden, so dass Zweikomponentensysteme entsprechend einem Volumenverhältnis von 20:80 bis 80:20, vorzugsweise 60:40 bis 40:60 und besonders bevorzugt 50:50 erhalten werden.

Die erfindungsgemäßen 2K-Strukturklebstoffe sind typischerweise hochreaktiv und können daher normalerweise nur unter Zuhilfenahme geeigneter Dosiersysteme mit zwei Kammern verarbeitet werden. Dies sind vorzugsweise 2K-Kartuschensysteme in Verbindung mit geeigneten Statikmischern, wie diese beispielhaft in der WO 2011/162728 und der dort zitierten Sekundärliteratur beschrieben werden. Besonders bevorzugt einsetzbar im Rahmen der vorliegenden Erfindung sind Doppelkartuschen-Systeme mit Kindersicherung, wie diese in der deutschen Gebrauchsmusteranmeldung DE 202016102271 (U1) beschrieben werden.

Die erfindungsgemäßen 2K-Strukturklebstoffe härten vergleichsweise schnell aus und sind so formuliert, dass sie abhängig von der Anwesenheit von Katalysatoren der Komponente iii)- insbesondere Wasser- in einem Zeitraum von 30 Sekunden bis zu 5 Minuten eine Montagefestigkeit aufbauen, und im Zeitraum von 3 Stunden bis 24 Stunden ihre Endfestigkeit erreichen.

Im Rahmen entsprechender Versuche (siehe auch Beispiele unten) hat sich gezeigt, dass erfindungsgemäß ein besonders günstiges Verhältnis von Korrekturzeit einerseits zu Montagefestigkeit andererseits erzielt wird.

Die erfindungsgemäß einsetzbaren 2K-Strukturklebstoffe zeigen - auch ohne Zusatz spezieller Haftvermittler wie beispielsweise von funktionellen Silanen der vorstehend genannten Art - eine hervorragende Haftung auf organischen und anorganischen Substraten, insbesondere auf Holz- und Holzwerkstoffen, Stahl, Aluminium, Beton, Glas, Leder, Keratin oder Papier, sowie auch auf Kunststoffen, insbesondere ABS, Polycarbonat oder PVC. Der erfindungsgemäße 2K-Strukturklebstoff hat sich dabei beispielhaft als besonders effizient für das Anbringen von Kunststoff oder Holzklötzen an Klauen von Nutztieren, beispielsweise Kühen erwiesen.

Die Haftung auf anderen organischen Substraten, insbesondere Kunststoffen oder anorganischen Substraten insbesondere Metallen und Metalllegierungen kann gezielt durch Zugabe der vorstehend im Rahmen der Komponente iii) geeigneten Stoffe gesteuert werden. Somit stellt die vorliegende Erfindung einen wesentlichen Fortschritt bei der konstruktiven Verbindung gleicher oder unterschiedlicher Substrate dar.

Zur Erzeugung einer ausreichenden Haftung kann es erfindungsgemäß gegebenenfalls bevorzugt sein, den Untergrund vorzubereiten. Dies kann durch mechanische Vorbehandlung wie beispielsweise Anrauhen oder Anschleifen erfolgen, aber auch durch chemische Vorbehandlung wie Plasma- oder Koronavorbehandlung aber auch durch Anwendung von Grundierungen und Haftprimern.

Bevorzugte Grundierungen sind Lösungen der vorstehend als Komponente iii) genannten funktionellen Silane in organischen Lösungsmitteln oder Lösungen von chlorierten Polyolefinen und/oder modifizierten chlorierten Polyolefinen in organischen Lösemitteln.

Derartige Lösungen von chlorierten Polyolefinen sind insbesondere als Primer vorteilhaft, wenn eine ausreichende Haftung zu unpolaren Kunststoffen, insbesondere Polyolefin-Kunststoffen wie beispielsweise Polypropylen erzielt werden soll. Die chlorierten Polyolefine bzw. modifizierten chlorierten Polyolefine weisen bevorzugt einen Chlorgehalt von 10 bis 25 Gew.-% auf, bezogen auf den Festkörper (Feststoffanteil) der chlorierten Polyolefine. Bevorzugt weisen die eingesetzten chlorierten Polyolefine bzw. modifizierten chlorierten Polyolefine ein zahlenmittleres Molekulargewicht von 8.000 bis 50.000 auf. Die Menge an eingesetzten chlorierten Polyolefinen in der Primerformulierung beträgt vorzugsweise 0,2 bis 5,0 Gew.-%, jeweils bezogen auf das Gesamtgewicht der Primer und auf den Festkörper der chlorierten Polyolefine.

Die erfindungsgemäß eingesetzten chlorierten Polyolefine sind dem Fachmann geläufig und im Handel beispielsweise unter den Handelsnamen Eastman TM chlorierte Polyolefine der Firma Eastman Chemical Products, INC., Trapylen der Firma Tramaco oder Hardlen der Firma Toyo Kasei erhältlich.

Die erfindungsgemäß einsetzbaren 2K-Strukturklebstoffe können bezüglich der Verarbeitungsviskosität niedrigviskos bis hochviskos eingestellt werden. Sie weisen bevorzugt, bei einer Temperatur von 23°C, eine Viskosität, unmittelbar nach dem Vermischen, im Bereich von 200 mPa·s bis 100.000 mPa·s auf, vorzugsweise von 500 mPas bis 50.000 mPas, wobei die Viskosität rotationsviskosimetrisch gemäß DIN EN ISO 3219 bestimmt wird.

Niedrigviskose Formulierungen kommen zum Einsatz, wenn Substrate quasi spaltfrei, d.h. mit einem Spaltmaß von weniger als 0,1 mm verklebt werden sollen, höherviskose Einstellungen werden verwendet, wenn mit größerem Spaltmaß verklebt werden soll.

Im Rahmen der vorliegenden Erfindung wurde die Beobachtung gemacht, dass erfindungsgemäß Verklebungen mit überraschend hohen inneren Festigkeiten erhältlich sind, so dass Verklebungen mit einem Spaltmaß von 0,1 mm bis 3 mm mit hoher Festigkeit hergestellt werden können.

Die 2K-Strukturklebstoffe können im erfindungsgemäßen Verfahren in einem wesentlich größeren Temperaturfenster verarbeitet werden als 2K-Strukturklebstoffe des Standes der Technik. Die erfindungsgemäßen Zweikomponenten-Strukturklebstoffe härten in einem Temperaturbereich von -20°C bis +50°C zuverlässig aus. Die ausgehärteten Klebstoffe zeigen darüber hinaus eine überragende Schlagzähigkeit bei tiefen Temperaturen bis zu -40°C und besitzen gleichzeitig eine hervorragende Hochtemperaturbeständigkeit im Temperaturbereich bis zu 150°C.

Die nachstehenden Beispiele für Formulierungen von Strukturklebstoffen sollen die Erfindung näher erläutern, ohne diese aber einzuschränken. Ein Vergleich der erfindungsgemäßen Beispiele mit nicht erfindungsgemäßen Beispielen soll die technischen Vorteile des erfindungsgemäßen Verfahrens und des ausgehärteten Strukturklebstoffes verdeutlichen.

### Beispiel 1:

### Herstellung eines Zweikomponenten-Strukturklebstoffs (erfindungsgemäß)

### Komponente A [Komponente i)]

Polyisocyanurat-Polyisocyanat auf Basis von Hexamethylendiisocyanat mit einem NCO-Gehalt von 23 % und einer Viskosität von 2900 mPas(23°C), Restmonomergehalt <0,1%, Desmodur Ultra N3300, Handelsprodukt der Fa. Covestro AG, Leverkusen

### Komponente B [Mischung der Komponenten ii) und iii)]

| | |
|---|---|
| 97,5 Gew.-% | Polyasparaginsäureester auf Basis von 1,6-Diaminohexan und Maleinsäurediethylester, [Komponente ii)] |
| 0,5 Gew.-% | demineralisiertes Wasser [Komponente iii)] |
| 2 Gew.-% | 3,3'-Dimethyl-4,4'-diamino-dicyclohexylmethan, Laromin C260, Handelsprodukt der Fa. BASF AG, Ludwigshafen [Komponente iii)] |

Die beiden Komponenten A und B werden in eine 2K-Kartusche - Sulzer Mixpac 2K Klebstoff A System, der Fa. Sulzer Mixpac AG, Haag Schweiz - abgefüllt. Die Applikation erfolgt im Volumenverhältnis 1:1 mittels Statikmischer Sulzer 2K-Mischer MAH 06-21T der Fa. Sulzer Mixpac AG.

Dieser erfindungsgemäße Strukturklebstoff härtet auch bei einer Temperatur von -18°C zuverlässig innerhalb von 24 Stunden aus.

### Beispiel 2:

### Herstellung eines Zweikomponenten-Strukturklebstoffs (erfindungsgemäß)

### Komponente A [Komponente i)]

Polyisocyanat auf Basis von Hexamethylendiisocyanat mit Iminooxadiazindion-Struktur und einem NCO-Gehalt von 23,5 % und einer Viskosität von 700 mPas(23°C), Restmonomergehalt <0,3%, Desmodur N3900, Handelsprodukt der Fa. Covestro AG, Leverkusen

### Komponente B [Mischung der Komponenten ii) und iii)]

| | |
|---|---|
| 95 Gew.-% | Polyasparaginsäureester auf Basis von 2-Methyl-1,5-Diaminopentan und Maleinsäurediethylester, Desmophen NH1220, Handelsprodukt der Fa. Covestro AG, Leverkusen [Komponente ii)] |
| 1 Gew.-% | 3-Glycidoxypropyltrimethoxysilan(Komponente iii)) |
| 4 Gew.-% | Butandiol-1,4 (Komponente iii)) |

Die beiden Komponenten A und B werden in eine2K-Kartusche - Sulzer Mixpac 2K Klebstoff A System, der Fa. Sulzer Mixpac AG, Haag Schweiz - abgefüllt. Die Applikation erfolgt im Volumenverhältnis 1:1 mittels Statikmischer Sulzer 2K-Mischer MAH 06-21T der Fa. Sulzer Mixpac AG.

Dieser erfindungsgemäße Strukturklebstoff härtet auch bei einer Temperatur von -18°C zuverlässig innerhalb von 24 Stunden aus.

### Beispiel 3:

### Herstellung eines Zweikomponenten-Strukturklebstoffs (erfindungsgemäß)

### Komponente A [Komponente i)]

handelsübliches Polyisocyanat auf Basis von Hexamethylendiisocyanat mit Biuretstruktur und einem NCO-Gehalt von 22 % und einer Viskosität von 8000 mPas(23°C), Desmodur N100, Restmonomergehalt <0,3%, Handelsprodukt der Fa. Covestro AG, Leverkusen

### Komponente B [Mischung der Komponenten ii) und iii)]

| | |
|---|---|
| 92,5 Gew.-% | Polyasparaginsäureester auf Basis von 2-Methyl-1,5-Diaminopentan und Maleinsäurediethylester, Desmophen NH1220, Handelsprodukt der Fa. Covestro AG, Leverkusen [Komponente ii)] |
| 5 Gew,-% | hochdisperse Kieselsäure (HDK H18 der Fa. Wacker Chemie AG, Burghausen [Komponente iii)] |
| 2 Gew.-% | 1-Amino-3,3,5-trimethyl-5-aminomethylcyclohexan (Vestamin IPD der Fa. Evonik AG Essen), [Komponente iii)] |
| 0,5 Gew.-% | demineralisiertes Wasser [Komponente iii)] |

Die beiden Komponenten A und B werden in eine 2 K-Kartusche - Sulzer Mixpac 2K Klebstoff A System, der Fa. Sulzer Mixpac AG, Haag Schweiz - abgefüllt. Die Applikation erfolgt im Volumenverhältnis 1:1 mittels Statikmischer Sulzer 2K-Mischer MAH 06-21T der Fa. Sulzer Mixpac AG.

Dieser erfindungsgemäße Strukturklebstoff härtet auch bei einer Temperatur von -18°C zuverlässig innerhalb von 24 Stunden aus.

### Beispiel 4:

### Herstellung eines Zweikomponenten-Strukturklebstoffs (erfindungsgemäß)

### Komponente A [Komponente i), Mischung von zwei Polyisocyanaten]

| | |
|---|---|
| 60 Gew.-% | von einem Polyisocyanurat-Polyisocyanat auf Basis von Hexamethylendiisocyanat mit einem NCO-Gehalt von 23 % und einer Viskosität von 900 mPas(23°C), Desmodur N3600, Handelsprodukt der Fa. Covestro AG, Leverkusen werden abgemischt mit |
| 40 Gew.-% | von einem polyestermodifizierten Polyisocyanurat-Polyisocyanat auf Basis von Hexamethylendiisocyanat mit einem NCO-Gehalt von 11 %, einer Viskosität von 6000 mPas(23°C) und einem Polyestergehalt von 45 Gew.-%, Desmodur N3800, Handelsprodukt der Fa. Covestro AG, Leverkusen |
| Komponente B | [Mischung der Komponenten ii) und iii)] |
| 80 Gew% | Polyasparaginsäureester auf Basis von 2-Methyl-,5-Diaminopentan und Maleinsäurediethylester, Desmophen NH1220, Handelsprodukt der Fa. Covestro AG, Leverkusen [Komponente ii)] |
| 20 Gew% | Martinal OL 104 LEO (Gefälltes Aluminiumhydroxid der Fa. Huber, Martinswerk GmbH, Bergheim [Komponente iii)] |

Die beiden Komponenten A und B werden in eine 2 K-Kartusche - Sulzer Mixpac 2K Klebstoff A System, der Fa. Sulzer Mixpac AG, Haag Schweiz - abgefüllt. Die Applikation erfolgt im Volumenverhältnis 1:1 mittels Statikmischer Sulzer 2K-Mischer MAH 06-21T der Fa. Sulzer Mixpac AG.

Dieser erfindungsgemäße Strukturklebstoff härtet auch bei einer Temperatur von -18°C innerhalb von 24 Stunden aus.

### Vergleich der klebtechnischen Eigenschaften

Die 2K-Klebstoffe wurden zur Bestimmung der Zugscherfestigkeiten in Übereinstimmung mit der DIN/EN 1465(2009-07) auf aufgeraute V2A Stahl Prüfkörper mit einer Länge von 100 mm und einer Breite von 25 mm einseitig aufgetragen, anschließend wurde auf einer Überlappungslänge von 12 mm mit dem jeweils angegebenem Spaltmaß verklebt. Die Korrekturzeit wurde bestimmt als die Zeit in der die beiden verklebten Prüfkörper sich noch manuell ohne Kraftaufwand verschieben lassen. Die Montagefestigkeit wurde bestimmt als die Zeit, nach der die verklebten Prüfkörper bei waagerechter Fixierung an einem Ende mit einer Masse von 1kg belastet werden können.

Die Bestimmung der Zugscherfestigkeit erfolgte mit Hilfe einer Zugprüfmaschine (Shimadzu, AGS-X HC 20 KN) nach einer Zeit von 48 Stunden (22°C, 40% rel. Luftfeuchtigkeit, Prüfgeschwindigkeit 2 mm/Minute). Die in nachstehender Tabelle angegebenen Werte für die Zugfestigkeiten wurden als Mittelwert, gemessen an jeweils drei Prüfkörpern, bestimmt.

**Tabelle 1: Vergleich klebtechnischer Daten**

| | **Beispiel 1** | **Beispiel 2** | **Beispiel 3** | **Beispiel 4** |
|---|---|---|---|---|
| Korrekturzeit (23°C) | 35 sec | 180 sec | 30 sec | 220 sec |
| Montagefestigkeit (23°C) | 150 sec | 540 sec | 140 sec | 500 sec |
| Zugscherfestigkeit Buchenholz | 7,6 MPa | 9,2 MPa | 7,9 MPa | 7,0 MPa |
| | 8,4 MPa | 11,0 MPa | 8,6 MPa | 7,4 MPa |
| | (ohne / 1 mm Spalt) | (ohne / 1 mm Spalt) | (ohne / 1 mm Spalt) | (ohne / 1 mm Spalt) |
| Zugscherfestigkeit V2A-Stahl angeraut | 12,2 MPa | 16,4 MPa | 12,5 MPa | 10,0 MPa |
| | 13,5 MPa | 16,4 MPa | 13,2 MPa | 10,4 MPa |
| | (ohne / 1 mm Spalt) | (ohne / 1 mm Spalt) | (ohne / 1 mm Spalt) | (ohne / 1 mm Spalt) |
| Zugscherfestigkeit Aluminium angeraut | 11,6 MPa | 14,2 MPa | 11,6 MPa | 10,2 MPa |
| | 11,8 MPa | 14,8 MPa | 12,2 MPa | 11,0 MPa |
| | (ohne / 1 mm Spalt) | (ohne / 1 mm Spalt) | (ohne / 1 mm Spalt) | (ohne / 1 mm Spalt) |
| Zugscherfestigkeit ABS, vorgereinigt mit Isopropanol | 7,2 MPa | 10,2 MPa | 9,4 MPa | 7,0 MPa |
| | 8,0 MPa | 10,5 MPa | 10,0 MPa | 7,5 MPa |
| | (ohne / 0,5 mm Spalt) | (ohne / 0,5 mm Spalt) | (ohne / 0,5 mm Spalt) | (ohne / 0,5 mm Spalt) |
| Zugscherfestigkeit Polycarbonat, vorgereinigt mit Isopropanol | 7,6 MPa | 9,8 MPa | 7,4 MPa | 7,5 MPa |
| | 7,8 MPa | 10,0 MPa | 7,2 MPa | 7,9 MPa |
| | (ohne / 0,5 mm Spalt) | (ohne / 0,5 mm Spalt) | (ohne / 0,5 mm Spalt) | (ohne / 0,5mm Spalt) |
| Zugscherfestigkeit PVC (hart), vorgereinigt mit Isopropanol | 8,4 MPa | 11,2 MPa | 9,2 MPa | 7,8 MPa |
| | 8,8 MPa | 11,0 MPa | 9,5 MPa | 8,6 MPa |
| | (ohne / 0,5 mm Spalt) | (ohne / 0,5 mm Spalt) | (ohne / 0,5 mm Spalt) | (ohne / 0,5 mm Spalt) |

### Beispiel 5:

### Nicht erfindungsgemäßes Vergleichsbeispiel:

Mit einem handelsüblichen Zweikomponenten-Polyurethan-Klebstoff 'Easy-Mix PU-90, Polyurethan-Klebstoff der Fa. Weicon GmbH, Münster wurden V2A-Prüfkörper gemäß den vorstehend gemachten Angaben verklebt. Dieser Klebstoff besitzt eine Korrekturzeit von 70 sec bei 23°C und eine Montagefestigkeit von 9 Minuten. Das Verhältnis von Korrekturzeit zur Montagefestigkeit ist somit erheblich ungünstiger.

Bei einem Klebversuch bei einer Temperatur von 0°C härtete dieser Klebstoff nicht mehr aus.

### Beispiel 6:

### Nicht erfindungsgemäßes Vergleichsbeispiel (analog WO 2009-07/003596)

166 g des Prepolymers aus Beispiel A1 der WO 2009-07/003596 wurden mit 23,4 g des Polyasparaginsäureesters auf Basis von 2-Methyl-1,5-Diamopentan und Maleinsäurediethylester, Desmophen NH1220, Handelsprodukt der Fa. Covestro AG, Leverkusen (Komponente ii)) in einem Kunststoffbecher innig verrührt. Die Mischung hatte eine Verarbeitungszeit von 5 Minuten bei 23°C. Mit der frischen Mischung wurden V2A-Prüfkörper gemäß den vorstehend gemachten Angaben ohne Spalt und mit einer Spaltbreite von 1mm verklebt. Dieser Klebstoff besitzt eine Korrekturzeit von 300 sec bei 23°C, und eine Montagefestigkeit von 50 Minuten. Die Bestimmung der Zugscherfestigkeit erfolgte mit Hilfe einer Zugprüfmaschine nach einer Zeit von 48 Stunden. Die Zugfestigkeiten wurden als Mittelwert, gemessen an jeweils drei Prüfkörpern bestimmt mit:
2,9 MPa (ohne Spalt)
2,7 MPa (1 mm Spaltbreite)

Dieser weichelastische Klebstoff ist zur Herstellung struktureller Verklebungen ungeeignet.

## Patentansprüche

1. Zweikomponenten-Strukturklebstoff, der zumindest die folgenden Komponenten aufweist:
(i) mindestens ein freie Isocyanatgruppen aufweisendes Polyisocyanat mit einem Gehalt an aliphatisch gebundenen NCO-Gruppen von 16,0 bis 24,0 Gew.-%, welches im Wesentlichen frei ist von Ester- und/oder Ether- und/oder Carbonatgruppen, wobei "im Wesentlichen frei von Ester- und/oder Ether- und/oder Carbonatgruppen" bedeutet, dass im Zweikomponenten-Strukturklebstoff weniger als 15 %, bezogen auf das Gesamtgewicht des Zweikomponenten-Strukturklebstoffes, als Reaktivkomponente bei der Herstellung von Isocyanatprepolymeren im Rahmen der Komponente (i) eingesetzt werden;
(ii) mindestens einen aminofunktionellen Polyasparaginsäureester der allgemeinen Formel 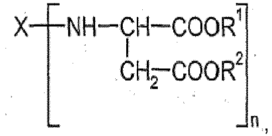 in der n = 2 und X für einen 2-wertigen organischen Rest steht, der durch Entfernung der Aminogruppen aus einem geradkettigen oder verzweigten aliphatischen Diamin erhältlich ist, welches bis zu 9 Kohlenstoffatome aufweist,
und R¹ und R² für eine Methyl- oder eine Ethylgruppe stehen,
wobei Lösungsmittel in Mengen von weniger als 5 Gew.-%, bezogen auf das Gesamtgewicht des Strukturklebstoffs, vorliegen,
wobei der Strukturkleber im ausgehärteten Zustand eine Zugscherfestigkeit von mindestens 7 MPa, bevorzugt mindestens 10 MPa aufweist, weiter bevorzugt mindestens 12 MPa, wobei die Zugscherfestigkeit gemäß Standard DIN/EN 1465 (2009-07) zwischen zwei Prüfkörpern aus angerautem V2A Stahl gemessen wird.

2. Verfahren zum strukturellen Verkleben von gleichen oder unterschiedlichen Substraten mit Zweikomponenten-Strukturklebstoffen, wobei das Verfahren zumindest die folgenden Schritte aufweist:
(1) Bereitstellen eines Zweikomponenten- Strukturklebstoffes, der zumindest die folgenden Komponenten enthält:
(i) mindestens ein freie Isocyanatgruppen aufweisendes Polyisocyanat mit einem Gehalt an aliphatisch gebundenen NCO-Gruppen von 16,0 bis 24,0 Gew.-%, welches im Wesentlichen frei ist von Ester und/oder Ether- und/oder Carbonatgruppen, wobei "im Wesentlichen frei von Ester- und/oder Ether- und/oder Carbonatgruppen" bedeutet, dass im Zweikomponenten-Strukturklebstoff weniger als 15 %, bezogen auf das Gesamtgewicht des Zweikomponenten-Strukturklebstoffes, als Reaktivkomponente bei der Herstellung von Isocyanatprepolymeren im Rahmen der Komponente (i) eingesetzt werden;
(ii) mindestens einen aminofunktionellen Polyasparaginsäureester der allgemeinen Formel 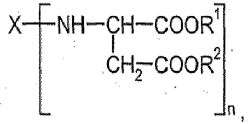 in der n = 2 und X für einen 2-wertigen organischen Rest steht, der durch Entfernung der Aminogruppen aus einem geradkettigen oder verzweigten aliphatischen Diamin erhältlich ist, welches bis zu 9 Kohlenstoffatome aufweist,
und R¹ und R² für eine Methyl- oder eine Ethylgruppe stehen;
wobei Lösungsmittel in Mengen von weniger als 5 Gew.-%, bezogen auf das Gesamtgewicht des Strukturklebstoffs, vorliegen,
(2) strukturelles Verkleben von zumindest zwei gleichen oder unterschiedlichen Substraten;
(3) Aushärten der zumindest einen Verklebung, so dass diese im ausgehärteten Zustand eine Zugscherfestigkeit von mindestens 7 MPa bevorzugt mindestens 10 MPa, weiter bevorzugt mindestens 12 MPa aufweist, wobei die Zugscherfestigkeit gemäß Standard DIN EN 1465 (2009-07) zwischen zwei Prüfkörpern aus angerautem V2A Stahl gemessen wird.

3. Strukturklebstoff gemäß Anspruch 1 oder Verfahren gemäß Anspruch 2, wobei X für einen Rest steht, der durch Entfernung der Aminogruppen aus 1,4-Diaminobutan, 1,6-Diaminohexan, 2,2,4- Trimethyl-1,6-und/oder 2,4,4-Trimethyl-1,6-diaminohexan erhältlich ist, vorzugsweise durch Entfernung der Aminogruppen aus 2-Methyl-1,5-diaminopentan erhältlich ist.

4. Strukturklebstoff gemäß zumindest einem der Ansprüche 1 oder 3, oder Verfahren gemäß Anspruch 2 oder 3, wobei (i) enthält:
(i) mindestens ein freie Isocyanatgruppen aufweisendes Polyisocyanat auf Basis von Hexamethylendiisocyanat mit einem Gehalt an aliphatisch gebundenen NCO-Gruppen von 17,0 bis 23,5 Gew. -%, welches im Wesentlichen frei ist von Ester- und/oder Ether- und/oder Carbonatgruppen, wobei "im Wesentlichen frei von Ester- und/oder Ether- und/oder Carbonatgruppen" bedeutet, dass im Zweikomponenten-Strukturklebstoff weniger als 15 %, bezogen auf das Gesamtgewicht des Zweikomponenten-Strukturklebstoffes, als Reaktivkomponente bei der Herstellung von Isocyanatprepolymeren im Rahmen der Komponente (i) eingesetzt werden.

5. Strukturklebstoff gemäß Anspruch 1 oder zumindest einem der Ansprüche 3 oder 4, oder Verfahren gemäß Anspruch 2 oder zumindest einem der Ansprüche 3 oder 4, wobei (i) enthält
(i) zumindest ein Alkoxysilangruppen-aufweisendes Polyisocyanatgemisch.

6. Strukturklebstoff oder Verfahren gemäß zumindest einem der Ansprüche 1 bis 4 oder 5, wobei (ii) enthält:
(ii) mindestens einen aminofunktionellen Polyasparaginsäureester der oben genannten Formel, in der n = 2 und X für einen 2-wertigen organischen Rest steht, der durch Entfernung der Aminogruppen aus 1,6-Diaminohexan oder durch Entfernung der Aminogruppen aus 2-Methyl-1,5-diaminopentan erhalten wird, und R¹ und R² für eine Ethylgruppe stehen;

7. Strukturklebstoff oder Verfahren gemäß zumindest einem der Ansprüche 1 bis 5 oder Anspruch 6, **dadurch gekennzeichnet, dass** der Zweikomponenten-Strukturklebstoff zumindest eine weitere Komponente (iii) enthält, wobei diese weitere Komponente vorzugsweise Wasser enthält oder Wasser ist.

8. Strukturklebstoff oder Verfahren gemäß zumindest einem der Ansprüche 1 bis 6 oder Anspruch 7, **dadurch gekennzeichnet, dass** die Komponente (iii) aliphatische und/oder cycloaliphatische Diamine enthält, und/oder:
dass die Komponente (iii) zumindest einen Haftvermittler enthält, vorzugsweise zumindest ein funktionelles Silan, und/oder:
dass die Komponente (iii) anorganische und/oder organische Flammschutzmittel enthält, und/oder:
dass die Komponente (iii) hochdisperse Kieselsäuren enthält, und/oder:
dass die Komponente (iii) Polyole enthält.

9. Strukturklebstoff oder Verfahren gemäß zumindest einem der Ansprüche 1 bis 7 oder Anspruch 8, **dadurch gekennzeichnet, dass** die beiden Komponenten (i) und (ii), wobei (ii) gegebenenfalls die Komponente (iii) enthält, des Strukturklebstoffs im Volumenverhältnis 60:40 bis 40:60 eingesetzt werden oder:
**dadurch gekennzeichnet, dass** die beiden Komponenten (i) und (ii), wobei (ii) gegebenenfalls die Komponente (iii) enthält, im Volumenverhältnis 50:50 eingesetzt werden.

10. Strukturklebstoff oder Verfahren gemäß einem der Ansprüche 1 bis 9, **dadurch gekennzeichnet, dass** Lösungsmittel in Mengen von weniger als 2 Gew.-%, bezogen auf das Gesamtgewicht des Strukturklebstoffs, vorliegen.

11. Verfahren gemäß zumindest einem der Ansprüche 2 bis 8 oder 9, **dadurch gekennzeichnet, dass** die zwei Komponenten in Schritt (2) mithilfe eines 2K-Kartuschensystems mit Statikmischer auf die zwei Substratoberflächen appliziert werden.

12. Substrate, Gegenstände oder Artikel, **dadurch gekennzeichnet, dass** sie mittels eines Verfahrens und/oder unter Verwendung eines Strukturklebstoffes gemäß zumindest einem der Ansprüche 1 bis 11erhalten und insbesondere konstruktiv verklebt und ausgehärtet werden.

## Claims

1. Two-component structural adhesive, comprising at least the following components:
(i) at least one polyisocyanate containing free isocyanate groups and having a content of aliphatically bound NCO groups of 16.0 to 24.0 wt. %, which is essentially free of ester groups and/or ether groups and/or carbonate groups, where "essentially free of ester groups and/or ether groups and/or carbonate groups" means that in the two-component structural adhesive less than 15%, based on the total weight of the two-component structural adhesive, is used as reactive component in the preparation of isocyanate prepolymers in the context of component (i);
(ii) at least one amino-functional polyaspartic ester of the general formula 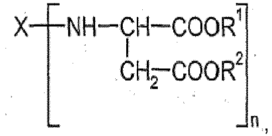 in which n = 2 and X is a 2-valent organic radical obtainable by removing the amino groups from a straight-chain or branched aliphatic diamine having up to 9 carbon atoms,
and R¹ and R² represent a methyl or an ethyl group,
wherein solvents are present in amounts of less than 5% by weight, based on the total weight of the structural adhesive,
wherein the structural adhesive having a tensile shear strength in the cured state of at least 7 MPa, preferably at least 10 MPa, further preferably at least 12 MPa, the tensile shear strength being measured according to standard DIN/EN 1465 (2009-07) between two test specimens of roughened V2A steel.

2. A method for structurally bonding the same or different substrates with two-component structural adhesives, said method comprising at least the following steps:
(1) providing a two-component structural adhesive comprising at least the following components:
(i) at least one polyisocyanate containing free isocyanate groups and having a content of aliphatically bound NCO groups of 16.0 to 24.0 wt. %, which is essentially free of ester groups and/or ether groups and/or carbonate groups, where "essentially free of ester groups and/or ether groups and/or carbonate groups" means that in the two-component structural adhesive less than 15%, based on the total weight of the two-component structural adhesive, is used as reactive component in the preparation of isocyanate prepolymers in the context of component (i);
(ii) at least one amino-functional polyaspartic ester of the general formula 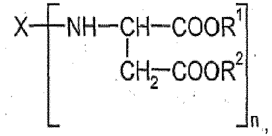 in which n = 2 and X is a 2-valent organic radical obtainable by removing the amino groups from a straight-chain or branched aliphatic diamine having up to 9 carbon atoms,
and R¹ and R² represent a methyl or an ethyl group,
wherein solvents are present in amounts of less than 5% by weight, based on the total weight of the structural adhesive
(2) structurally bonding at least two identical or different substrates;
(3) curing of the at least one bond so that the same has a tensile shear strength in the cured state of at least 7 MPa, preferably at least 10 MPa, further preferably at least 12 MPa, the tensile shear strength being measured according to standard DIN EN 1465 (2009-07) between two test specimen of roughened V2A steel.

3. Structural adhesive according to claim 1 or process according to claim 2, wherein X is a radical obtainable by removing the amino groups from 1,4-diaminobutane, 1,6-diaminohexane, 2,2,4-trimethyl-1,6- and/or 2,4,4-trimethyl-1,6-diaminohexane, preferably obtainable by removing the amino groups from 2-methyl-1,5-diaminopentane.

4. Structural adhesive according to any one of claims 1 or 3 or process according to claim 2 or 3, wherein (i) comprises:
(i) at least one polyisocyanate containing free isocyanate groups and being based on hexamethylene diisocyanate and having a content of aliphatically bound NCO groups of 17.0 to 23.5 wt. %, which is essentially free of ester groups and/or ether groups and/or carbonate groups, where "essentially free of ester groups and/or ether groups and/or carbonate groups" means that in the two-component structural adhesive less than 15%, based on the total weight of the two-component structural adhesive, is used as reactive component in the preparation of isocyanate prepolymers in the context of component (i);

5. Structural adhesive according to claim 1 or at least one of claims 3 or 4, or a process according to claim 2 or at least one of claims 3 or 4, wherein (i) comprises:
(i) at least one alkoxysilane group-containing polyisocyanate mixture

6. Structural adhesive or process according to at least one of claims 1 to 4 or 5, wherein (ii) comprises:
(ii) at least one amino-functional polyaspartic acid ester of the above formula, in which n = 2 and X is a 2-valent organic radical obtainable by removing the amino groups from 1,6-diaminohexane or by removing the amino groups from 2-methyl-1,5-diaminopentane, and R¹ and R² represent an ethyl group.

7. Structural adhesive or process according to at least one of claims 1 to 5 or claim 6, **characterized in that** the two-component structural adhesive comprises at least one further component (iii), said further component preferably comprising or being water.

8. Structural adhesive or process according to at least one of claims 1 to 6 or claim 7, **characterized in that** component (iii) contains aliphatic and/or cycloaliphatic diamines, and/or:
component (iii) contains at least one adhesion promoter, preferably at least one functional silane, and/or:
component (iii) contains inorganic and/or organic flame retardants, and/or:
component (iii) contains highly disperse silicas, and/or:
component (iii) contains polyols.

9. Structural adhesive or process according to at least one of claims 1 to 7 or claim 8, **characterized in that** the two components (i) and (ii), where (ii) optionally contains component (iii), of the structural adhesive are used in a volume ratio of 60:40 to 40:60 or:
**characterized in that** the two components (i) and (ii), where (ii) optionally contains component (iii), of the structural adhesive are used in a volume ratio of 50:50.

10. Structural adhesive or process according to any one of claims 1 to 9, **characterized in that** solvents are present in amounts of less than 2% by weight, based on the total weight of the structural adhesive.

11. Process according to at least one of claims 2 to 8 or 9, **characterized in that** the two components in step (2) are applied to the two substrate surfaces with the aid of a 2K cartridge system with static mixer.

12. Substrates, objects or articles, **characterized in that** they are obtained by means of a process and/or using a structural adhesive according to at least one of claims 1 to 11 and in particular are structurally bonded and cured.

## Revendications

1. Adhésif structurel bicomposant comprenant au moins les composants suivants :
(i) au moins un polyisocyanate présentant des groupes isocyanate libres ayant une teneur en groupes NCO à liaison aliphatique de 16,0 à 24,0 % en poids, qui est essentiellement exempt de groupes ester et/ou éther et/ou carbonate, « essentiellement exempt de groupes ester et/ou éther et/ou carbonate » signifiant que, dans l'adhésif structurel bicomposant, moins de 15 % de ceux-ci, par rapport au poids total de l'adhésif structurel bicomposant, sont mis en œuvre en tant que composant réactif dans la fabrication de prépolymères d'isocyanate dans le cadre du composant (i) ;
(ii) au moins un ester d'acide polyasparaginique à fonction amine de formule générale 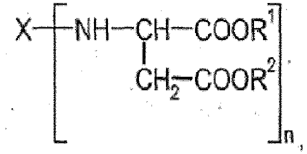
dans laquelle n = 2 et X représente un radical organique divalent, qui peut être obtenu par élimination des groupes amino d'une diamine aliphatique linéaire ou ramifiée, qui présente jusqu'à 9 atomes de carbone,
et R¹ et R² représentent un groupe méthyle ou éthyle,
les solvants étant présents en quantités inférieures à 5 % en poids, par rapport au poids total de l'adhésif structurel,
l'adhésif structurel présentant, à l'état durci, une résistance au cisaillement en traction d'au moins 7 MPa, de préférence d'au moins 10 MPa, encore plus préférentiellement d'au moins 12 MPa, la résistance au cisaillement en traction étant mesurée selon la norme DIN/EN 1465 (2009-07) entre deux éprouvettes en acier V2A écroui.

2. Procédé de collage structurel de substrats identiques ou différents avec des adhésifs structurels bicomposant, le procédé présentant au moins les étapes suivantes de :
(1) préparation d'un adhésif structurel bicomposant, comprenant au moins les composants suivants :
(i) au moins un polyisocyanate présentant des groupes isocyanate libres ayant une teneur en groupes NCO à liaison aliphatique de 16,0 à 24,0 % en poids, qui est essentiellement exempt de groupes ester et/ou éther et/ou carbonate, « essentiellement exempt de groupes ester et/ou éther et/ou carbonate » signifiant que, dans l'adhésif structurel bicomposant, moins de 15 % de ceux-ci, par rapport au poids total de l'adhésif structurel bicomposant, sont mis en œuvre en tant que composant réactif dans la fabrication de prépolymères d'isocyanate dans le cadre du composant (i) ;
(ii) au moins un ester d'acide polyasparaginique à fonction amine de formule générale 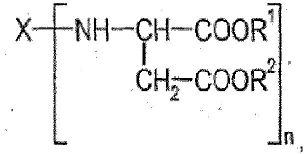
dans laquelle n = 2 et X représente un radical organique divalent, qui peut être obtenu par élimination des groupes amino d'une diamine aliphatique linéaire ou ramifiée, qui présente jusqu'à 9 atomes de carbone,
et R¹ et R² représentent un groupe méthyle ou éthyle ;
les solvants étant présents en quantités inférieures à 5 % en poids, par rapport au poids total de l'adhésif structurel,
(2) collage structurel d'au moins deux substrats identiques ou différents ;
(3) durcissement d'au moins un collage de telle sorte que celui-ci présente à l'état durci une résistance au cisaillement en traction d'au moins 7 MPa, de préférence d'au moins 10 MPa, encore plus préférentiellement d'au moins 12 MPa, la résistance au cisaillement en traction étant mesurée selon la norme DIN/EN 1465 (2009-07) entre deux éprouvettes en acier V2A écroui.

3. Adhésif structurel selon la revendication 1 ou procédé selon la revendication 2, dans lequel X représente un radical qui peut être obtenu par élimination des groupes amino du 1,4-diaminobutane, 1,6-diaminohexane, 2,2,4-triméthyl-1,6 et/ou 2,4,4-triméthyl-1,6-diaminohexane, de préférence par élimination des groupes amino du 2-méthyl-1,5-diaminopentane.

4. Adhésif structurel selon au moins l'une des revendications 1 ou 3 ou procédé selon la revendication 2 ou 3, dans lequel (i) contient :
(i) au moins un polyisocyanate présentant des groupes isocyanate libres à base de diisocyanate d'hexaméthylène ayant une teneur en groupes NCO à liaison aliphatique de 17,0 à 23,5 % en poids, qui est essentiellement exempt de groupes ester et/ou éther et/ou carbonate, « essentiellement exempt de groupes ester et/ou éther et/ou carbonate » signifiant que, dans l'adhésif structurel bicomposant, moins de 15 % de ceux-ci, par rapport au poids total de l'adhésif structurel bicomposant, sont mis en œuvre en tant que composant réactif dans la fabrication de prépolymères d'isocyanate dans le cadre du composant (i).

5. Adhésif structurel selon la revendication 1 ou au moins l'une des revendications 3 ou 4, ou procédé selon la revendication 2 ou au moins l'une des revendications 3 ou 4, dans lequel (i) contient :
(i) au moins un mélange de polyisocyanate présentant des groupes alcoxysilane.

6. Adhésif structurel ou procédé selon au moins l'une des revendications 1 à 4 ou 5, dans lequel (ii) contient :
(ii) au moins un ester d'acide polyasparaginique à fonction amine de la formule susmentionnée, dans laquelle n = 2 et X représente un radical organique divalent, qui peut être obtenu par élimination des groupes amino du 1,6-diaminohexane ou par élimination des groupes amino du 2-méthyl-1,5-diaminopentane, et R¹ et R² représentent un groupe éthyle.

7. Adhésif structurel ou procédé selon au moins l'une des revendications 1 à 5 ou la revendication 6, **caractérisé en ce que** l'adhésif structurel bicomposant contient au moins un autre composant (iii), cet autre composant contenant de préférence de l'eau ou étant de l'eau.

8. Adhésif structurel ou procédé selon au moins l'une des revendications 1 à 6 ou la revendication 7, **caractérisé en ce que** le composant (iii) contient des diamines aliphatiques et/ou cycloaliphatiques, et/ou :
**que** le composant (iii) contient au moins un agent adhésif, de préférence au moins un silane fonctionnel, et/ou :
**que** le composant (iii) contient des agents retardateurs de flamme inorganiques et/ou organiques, et/ou :
**que** le composant (iii) contient des acides siliciques hautement dispersés, et/ou :
**que** le composant (iii) contient des polyols.

9. Adhésif structurel ou procédé selon au moins l'une des revendications 1 à 7 ou la revendication 8, **caractérisé en ce que** les deux composants (i) et (ii), (ii) contenant le cas échéant le composant (iii), de l'adhésif structurel sont mis en œuvre en un rapport volumique de 60:40 à 40:60 ou :
**caractérisé en ce que** les deux composants (i) et (ii), (ii) contenant le cas échéant le composant (iii), sont mis en œuvre en un rapport volumique de 50 : 50.

10. Adhésif structurel ou procédé selon au moins l'une des revendications 1 à 9, **caractérisé en ce que** des solvants sont présents en des quantités inférieures à 2 % en poids, par rapport au poids total de l'adhésif structurel.

11. Procédé selon au moins l'une des revendications 2 à 8 ou 9, **caractérisé en ce que** les deux composants sont appliqués à l'étape (2) à l'aide d'un système de cartouches 2K avec mélangeur statique sur les deux surfaces de substrat.

12. Substrats, objets ou articles, **caractérisés en ce qu'**ils sont obtenus et en particulier collés de manière constructive et durcis au moyen d'un procédé et/ou en utilisant un adhésif structurel selon au moins l'une des revendications 1 à 11.
